# EUROPÄISCHE PATENTSCHRIFT

(11) **EP 0 682 234 B1**
(45) Veröffentlichungstag und Bekanntmachung des Hinweises auf die Patenterteilung: **27.08.1997**
(21) Anmeldenummer: 94107203.5
(22) Anmeldetag: 09.05.1994
(51) Int. Cl.: G01F 15/00, G01F 1/06

(54) **Zähler für Flüssigkeiten und Gase**
Fluorometer for liquids and gasses
Compteur de liquide et de gaz

(43) Veröffentlichungstag der Anmeldung: 15.11.1995
(73) Patentinhaber: Körner, Hans-Holger, 23758 Oldenburg in Holstein (DE)
(72) Erfinder: Körner, Hans-Holger, 23758 Oldenburg in Holstein (DE)
(74) Vertreter: Glawe, Delfs, Moll & Partner

(56) Entgegenhaltungen:
- EP-A- 0 414 176
- DE-U- 8 907 190
- FR-A- 476 484
- FR-A- 492 056
- FR-A- 635 126
- FR-A- 2 238 917
- US-A- 4 793 190

## Beschreibung

Die Erfindung betrifft einen Zähler für Flüssigkeiten und Gase bestehend aus einem kegelstumpfförmigen Gehäuse mit einem rohrförmigen Einlauf und Auslauf sowie einer in das Gehäuse einsetzbaren kegelstumpfförmigen Messkapsel mit einem ein Zählwerk in Bewegung setzenden Antrieb, wobei die Messkapsel mittels einer Einlassbohrung mit einer ersten Dichtung an den Einlauf und mittels einer Auslassbohrung mit einer zweiten Dichtung an den Auslauf des Gehäuses angeschlossen ist.

Aus der Offenlegungsschrift DT-A1-2 337 465 ist ein Mehrstrahlzähler für Flüssigkeiten bekannt geworden, bei dem in einem Druckgehäuse eine auswechselbare Messkassette mit den notwendigen Messelementen angeordnet ist. Das Druckgehäuse besteht aus einem Anschlussteil mit je einem Anschlussstutzen für den Einlauf und für den Auslauf des zu messenden Mediums sowie aus einer auf den Anschlussteil aufgesetzten Druckhaube, die mit einer Überwurfmutter mit dem Anschlussteil verbunden ist. Der Übergang zwischen Anschlussteil und Druckhaube wird von einem O-Ring abgedichtet. Die aus einem Messeinsatz, einer Kassettenhaube, einem Kassettenmittelstück und einem Kanalteil bestehende Messkassette wird vom Anschlussteil und von der Druckhaube weitgehend umschlossen. Die Druckhaube endet an einer transparenten Kopfpartie der Kassettenhaube. Ein ringförmiger O-Ring dichtet den Übergang zwischen Druckhaube und Kopfpartie. Der Zählerstand ist durch die transparente Kopfpartie hindurch ablesbar. Die Messkassette sitzt mit ihrem kegelstumpfförmigen Kanalteil im Anschlussteil und wird über die Druckhaube und die Überwurfmuttter in das Anschlussteil gepresst. Zur Dichtung zwischen der Einlaufseite und der Messkassette einerseits und zur Dichtung der Auslaufseite und der Messkassette andererseits ist je eine Dichtungsmanschette vorgesehen, die der Mantelfläche des kegelstumpfförmigen Kanalteiles angepasst ist. Das Medium strömt horizontal über einen Einlaufstutzen in einen Einlaufkanal des Kanalteiles und gelangt dann in vertikaler Richtung durch Sieböffnungen und Einlauföffnungen in den Messeinsatz. Das Medium strömt vom Messeinsatz über Auslauföffnungen und einen konzentrischen Kanal des Kanalteiles in horizontaler Richtung durch einen Auslaufkanal zum Auslaufstutzen. Der Druckausgleich zwischen Gehäuse und Messkassette wird erreicht durch am Umfang der Kassettenhaube angeordnete Druckausgleichsöffnungen und durch einen im Kanalteil angeordneten Druckausgleichskanal. Unter dem Druck des Mediums stehen daher nur der Anschlussteil, die Druckhaube und die Kopfpartie des Kassettenhaube. Zur Justierung der Messkassette ist im Kassettenmittelstück ein verdrehbarer Regulierzylinder mit einer Nut eingesetzt. Eine oberhalb der Sieböffnungen liegende Bohrung leitet je nach Stellung der Nut zur Bohrung das einströmende Medium in den konzentrischen Auslaufkanal ab. Dadurch ergibt sich für das strömende Medium ein veränderbarer Nebenschluss, mit dessen Hilfe die Messkassette geeicht werden kann. Nach dem Eichvorgang wird der Regulierzylinder mit der Kassettenhaube verklebt und durch das Aufsetzen der Druckhaube von aussen unzugänglich gemacht.

Ein Nachteil der bekannten Einrichtung liegt darin, dass die Messkassette wegen den dem Druckausgleich dienenden Druckausgleichsöffnungen und Druckausgleichskanal vom Medium umströmt wird. Falls die Dichtwirkung der Dichtungsmanschette an der Einlaufseite nachlässt oder falls die Dichtungsmanschette unsachgemäss eingesetzt ist oder falls beim Nachrüsten die Ersatzmanschette nicht die notwendigen Abmessungen aufweist oder falls Bauteile mit schlechter Toleranzabstimmung verwendet werden, besteht die Gefahr, dass das Medium an der Messkassette vorbeiströmt, ohne dass dieses vom Messeinsatz erfasst wird. Ein allfälliger Nebenschluss ist bei dieser Art von Zähler nicht feststellbar.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und einen Zähler mit einer Messkapsel zu schaffen, bei dem ein Umströmen der Messkapsel verhindert wird und ein allfälliges als Nebenschluss wirkendes Umströmen der Messkapsel von aussen jederzeit kontrollierbar ist.

Die durch die Erfindung erreichten Vorteile sind im wesentlichen darin zu sehen, dass der Raum zwischen der Messkapsel und dem Gehäuse drucklos ist und vom Medium unberührt bleibt. Falls das Medium eine Flüssigkeit ist, bleibt dieser Raum unbenetzt. Durch das Medium verursachte Ablagerungen im Gehäuse werden dadurch verhindert und ein Festbacken der Messkapsel im Gehäuse ausgeschlossen, was wiederum das Ausheben der Messkapsel aus dem Gehäuse ohne Kraftaufwand ermöglicht. Die im drucklosen Gehäuse angeordnete Messkapsel kann auch bei Unterdruck in der Leitung leicht aus dem Gehäuse gehoben werden. Der erfindungsgemässe Zähler bietet zudem die Möglichkeit, die Eichung der Messkapsel jederzeit von aussen durchzuführen.

Im folgenden wird die Erfindung anhand von lediglich einen Ausführungsweg darstellenden Zeichnungen näher erläutert.

Es zeigen:
- Fig. 1: einen Einstrahlzähler mit einer Messkapsel,
- Fig. 2: eine Ansicht von unten der Messkapsel gemäss Fig. 1,
- Fig. 3: einen Schnitt entlang der Linie A-B der Fig. 2,
- Fig. 4: eine Ausführungsvariante der Messkapsel gemäss Fig. 3 mit einer justierbaren Bodenplatte,
- Fig. 5: eine Ausführungsvariante der Messkapsel gemäss Fig. 4 mit einer Koppelscheibe zur Erfassung der Turbinendrehzahl,
- Fig. 6a, Fig. 6b, Fig. 6c, Fig. 6d: unterschiedliche Kapselprofile der Messkapsel und
- Fig. 7: einen Mehrstrahlzähler mit einer Messkapsel.

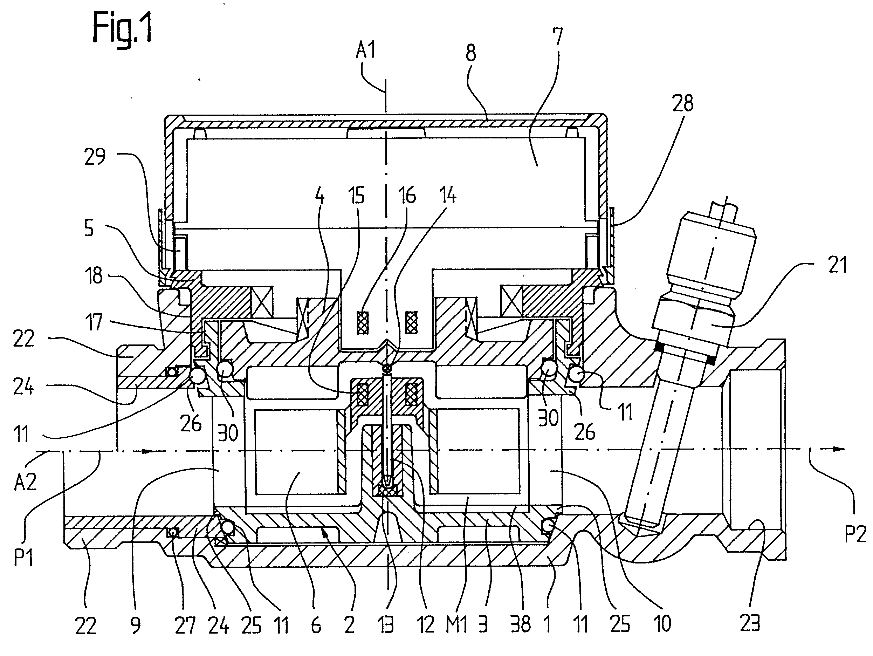

In den Fig. 1 bis 7 ist mit 1 ein kegelstumpfförmiges Gehäuse bezeichnet, welches einen rohrförmigen mit einem ersten Pfeil P1 symbolisierten Einlauf und einen rohrförmigen mit einem zweiten Pfeil P2 symbolisierten Auslauf aufweist, durch die ein Medium, beispielsweise Wasser oder Gas, einströmt beziehungsweise ausströmt. In das oben offene Gehäuse 1 wird eine kegelstumpfförmige Messkapsel 2 eingesetzt, die aus einem Kanalteil 3, einer Druckplatte 4 mit ersten Schlüsselflächen 4.1, einem Kopfring 5 mit zweiten Schlüsselflächen 5.1, einem Antrieb 6, einem Zählwerk 7 und einer Haube 8 besteht. Der Antrieb 6 kann eine Türbine, ein Flügelrad oder ein Ringkolben sein. Im vorliegenden Ausführungsbeispiel ist der Antrieb 6 ein Flügelrad 6. Der Kanalteil 3 der Messkapsel 2 weist eine Einlassbohrung 9 mit einem nicht dargestellten Sieb und eine Auslassbohrung 10 auf, die durch eine erste bzw. zweite Dichtung 11 gegen das Gehäuse 1 abgedichtet sind. Das Medium durchströmt eine Messkammer M1. Dabei wird das in der Messkammer M1 angeordnete Flügelrad 6 angetrieben. Das Flügelrad 6 dreht sich um eine in einer Zählermittelachse Al verlaufende Welle 12, die sich auf einem ersten Lager 13 abstützt und in der Bewegung in Richtung Zählwerk 7 durch ein zweites Lager 14 begrenzt wird. Die Drehbewegung des Flügelrades 6 wird mittels einer Magnetkupplung 15, 16 auf das Zählwerk 7 übertragen. Zum Verschrauben des Kanalteiles 3 mit dem Kopfring 5 ist am zählwerkseitigen Ende des Kanalteiles 3 und an der Kopfringinnenseite je ein Feingewinde 17 angeordnet. Zum Verschrauben des Gehäuses 1 mit dem Kopfring 5 ist am zählwerkseitigen Gehäuseende und an der Kopfringaussenseite je ein Kopfringgewinde 18 vorgesehen. Eine an der Gehäuseinnenwand angeordnete erste Nut 19 dient einem Parallelsteg 20 des Kanalteiles 3 als Führung. Der ersten Nut 19 gegenüberliegend ist eine weitere erste Nut 19 vorgesehen, sodass die Messkapsel 2 auch um 180° gedreht eingebaut werden kann.

Der in der Fig. 1 gezeigte Einstrahlzähler weist an der Auslaufseite des Gehäuses 1 eine Tauchhülse 21 auf, die in der durch die Zählermittelachse Al und eine Rohrmittelachse A2 gebildete Ebene liegt. Im vorliegenden Ausführungsbeispiel ist die Tauchhülse 21 gegenüber der Zählermittelachse A1 um etwa 15° nach aussen geneigt. In die Tauchhülse 21 wird ein Temperaturfühler eines an sich bekannten Wärmezählers eingebaut. Die Tauchhülse 21 liegt auf der Anzeigeseite des Zählers und ist daher in jedem Fall zugänglich, was bei den üblicherweise seitwärts angeordneten Tauchhülsen je nach Einbausituation nicht gewährleistet ist.

Auf der Einlaufseite des Einstrahlzählers endet das Gehäuse 1 mit einem Aussengewinde 22 und auf der Auslaufseite mit einem Innengewinde 23. Auf der Einlaufseite ist eine auswechselbare Buchse 24 aus antikorrosivem Material angeordnet, die als Anlagefläche für die erste Dichtung 11 der Messkapsel 2 dient. Die Buchse auf der Auslaufseite ist nicht dargestellt. Sie wird üblicherweise auch auf der Auslaufseite eingestzt. Durch die Verwendung von antikorrosiven Buchsen kann wird die Werkstoffwahl für das Gehäuse unabhängig vom Medium erfolgen. Vorteilhaft ist beispielsweise ein magnetisches Gehäusematerial als Abschirmung gegen magnetische Manipulation. Lackieren oder galvanisieren des Gehäuses kann durch die Verwendung von Buchsen ebenfalls entfallen, was wiederum der Umwelt dienlich ist. Ein erster Halbbogen 25 und ein zweiter Halbbogen 26 des Gehäuses 1 überragen das gehäuseseitige Ende der Buchse 24. Zwischen dem Gehäuse 1 und der Buchse 24 ist eine dritte Dichtung 27 angeordnet. Die Auslaufseite ist ohne Buchse 24 dargestellt. Die Auslaufseite kann aber ohne weiteres entsprechend der Einlaufseite aufgebaut sein. Das Zählwerk 7 wird mittels eines Plombenringes 28 gegen Manipulationen durch unberechtigte Personen gesichert. Ein erster Nocken 29 des Kopfringes 5 sichert das Zählwerk 7 gegen Verdrehen. Zwischen Kanalteil 3 und Druckplatte 4 liegt eine vierte Dichtung 30. Beim Einschrauben des Kopfringes 5 in das Kopfringgewinde 18 werden die erste und zweite Dichtung 11 an die entsprechenden Anlageflächen gepresst. Gleichzeitig wird auch der kegelstumpfförmige Kanalteil 3 im Gehäuse 1 über die ersten Halbbögen 25 endpositioniert. Auf der Einlaufseite ist unterhalb der Rohrmittelachse A2 die übliche Baulänge des Gehäuses 1 dargestellt. Oberhalb der Rohrmittelachse A2 ist die durch die erfindungsgemässe Konstruktion des Zählers erreichte Verkürzung der Baulänge des Gehäuses 1 dargestellt.

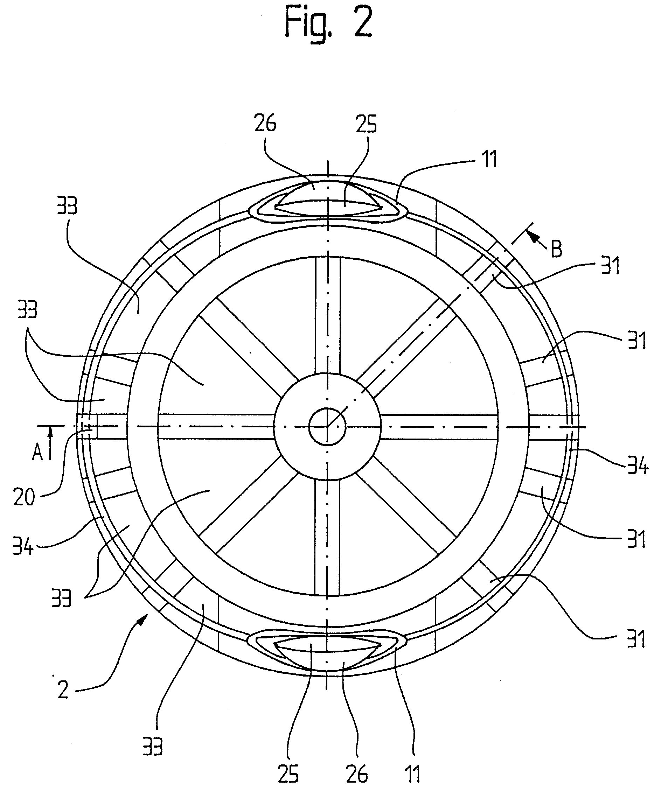

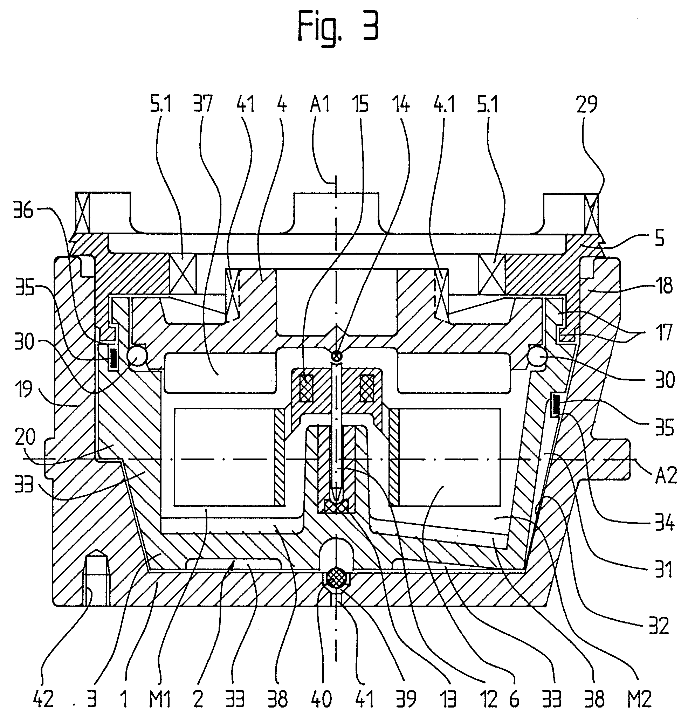

Fig. 2 zeigt die Messkapsel 2 von der Unterseite, an der strahlenförmig verlaufende keilförmige Rippen 31 angeordnet sind. Die Rippen 31 liegen in der Einbaulage an der eine Konusfläche 32 bildende Gehäuseinnenwand auf. Der zwischen den Rippen 31 und der Konusfläche 32 entstehende Hohlraum 33 nimmt das durch einen allfälligen Frost entstehende und die Wand des Kanalteiles 3 zerstörende Eis auf. Dabei bleiben die Dichtungen 11 im Eingriff, sodass nach dem Frost kein Wasserschaden entstehen kann. In einer an der Mantelfläche der Messkapsel 2 gürtelartig verlaufenden zweiten Nut 34 ist ein Gürtel 35 mit zwei Hälften angeordnet, wobei die eine Hälfte mit der einen Seite der ersten Dichtungen 11 und die andere Hälfte mit der anderen Seite der zweiten Dichtungen 11 verbunden ist. Der Gürtel 35 sichert die erste und die zweite Dichtung 11 gegen Aufsperren, gegen Herausfallen und gegen unsachgemässes Herausnehmen. Der entlang der Linie A-B verlaufende Schnitt ist in den Fig. 3, 4 und 5 dargestellt.

Fig. 3 zeigt den Schnitt A-B gemäss Fig. 2. Beim Einsetzen der Messkapsel 2 wird der Parallelsteg 20 in der an der Gehäuseinnenwand angeordneten ersten Nut 19 geführt. Dadurch gleitet die Messkapsel 2 drehbewegungsfrei in das Gehäuse 1, wobei die erste und die zweite Dichtung 11 präzise um die Anlageflächen des Einlaufs P1 beziehungsweise des Auslaufs P2 zu liegen kommen. An der der ersten Nut 19 gegenüberliegenden Seite weist die Messkammer M1 eine asymmetrische Vergrösserung M2 auf, die die Druckverluste und Antriebsverluste auf der passiven Seite der Messkammer Ml vermindert. Die in Fig. 2 dargestellte zweite Nut 34 geht im Bereich der ersten Nut 19 und auf der gegenüberliegenden Seite in einen Schlitz 36 über, der vom Kopfring 5 abgedeckt wird. Der Gürtel 35 wird dadurch unverlierbar. Die Druckplatte 4 weist an der Messkammerseite erste Stauflügel 37 auf. Zweite Stauflügel 38 sind messkammerseitig am Boden des Kanalteiles 3 angeordnet. Die Stauflügel 37, 38 beeinflussen die Anströmung des Flügelrades 6. Die Messkapsel 2 wird durch Verdrehen der Druckplatte 4 mittels eines an den ersten Schlüsselflächen 4.1 angreifenden Schlüssels geeicht. Dabei ändert sich die Lage der ersten Stauflügel 37 und somit die Anströmung des Flügelrades 6. Im Gehäuseboden ist ein Ventil 39 mit einer Gummikugel 40 vorgesehen, die bei einer Prüfung der Messkapsel 2 auf Nebenschluss durch eine Bohrung 41 angehoben wird. Tritt dabei kein Medium aus, besteht Gewissheit, dass kein Medium im Nebenschluss an der Messkammer vorbeiströmt und dass die ersten Dichtungen 11 die Messkapsel 2 gegenüber dem Gehäuse 1 vollkommen abdichten. Mit 42 ist ein Gewinde im Gehäuseboden bezeichnet, das der Befestigung des Gehäuses 1 auf einem nicht dargestellten Armaturträger dient.

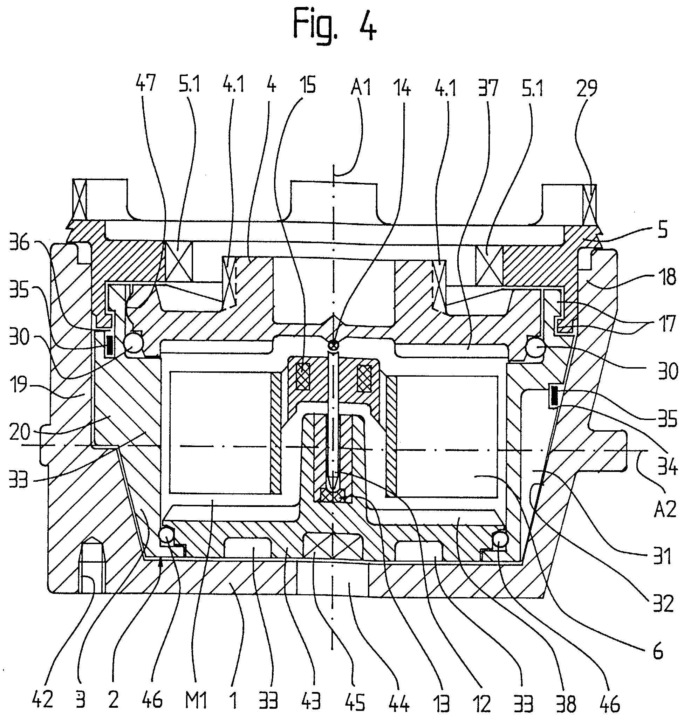

Fig. 4 zeigt den Schnitt A-B gemäss Fig. 2, wobei der Kanalteil 3 eine verdrehbare Bodenplatte 43 aufweist. Ein im Gehäuse 1 angeordnetes Bodenloch 44 ermöglicht den Zugang zu einem Innensechskant 45 der Bodenplatte 43. Die Messkapsel 2 wird durch Verdrehen der Bodenplatte 43 geeicht. Dabei ändert sich die Lage der zweiten Stauflügel 38 und somit die Anströmung des Flügelrades 6. Eine fünfte Dichtung 46 hält den Kanalteil 3 im Bodenbereich dicht. In dieser Ausführungsvariante ist die Druckplatte 4 mittels einer Rastnase 47 arretiert.

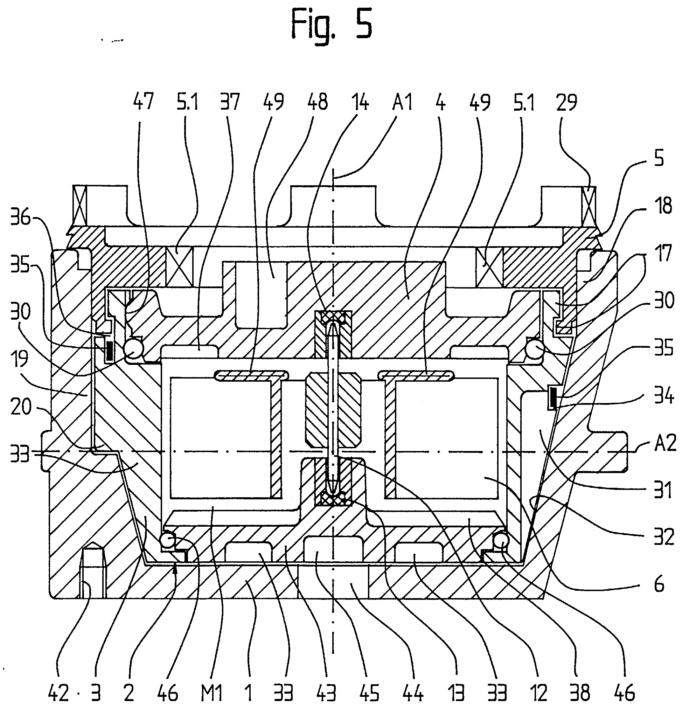

Fig. 5 zeigt den Schnitt A-B gemäss Fig. 2, wobei die Druckplatte 4 eine Tasche 48 zur Aufnahme einer nicht dargestellten Spule aufweist, die der berührungslosen Abtastung der Flügelradndrehzahl dient. Das Flügelrad 6 ist druckplattenseitig mit einer Koppelscheibe 49, beispielsweise eine ein Magnetfeld verändernde Scheibe mit Schlitzen ausgerüstet. Die durch Koppelscheibe 49 und Spule erzeugten die Drehzahl des Flügelrades 6 abbildenden Impulse werden von einer an sich bekannten Elektronik erfasst. Die Koppelscheibe 49 deckt weitgehend die Unterseite der Druckplatte 4 ab. Der noch zur Verfügung stehende freie Bereich der Unterseite erlaubt lediglich kleine erste Stauflügel 37. Die Eichung der Messkapsel 2 erfolgt somit mittels der zweiten Stauflügel 38 gemäss Fig. 4.

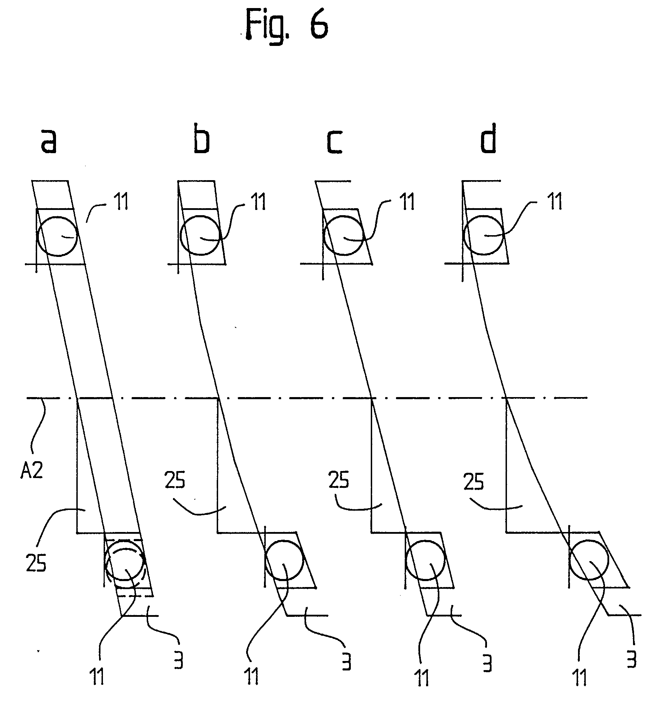

Fig. 6a bis 6d zeigen unterschiedliche Profile des Kanalteiles 3 mit der ersten Dichtung 11. Es zeigen Fig. 6a ein Kegelstumpfprofil mit einem Winkel von 12°, Fig. 6b ein Kegelstumpfprofil mit einem Bogen, Fig. 6c ein Kegelstumpfprofil mit einem Winkel von 15° und Fig. 6d ein Kegelstumpfprofil mit einer Ellipse. Aus der Gegenüberstellung der unterschiedlichen Kegelstumpfprofile wird ersichtlich, dass sich Bogen und Ellipse günstig auf die Länge des ersten Halbbogens 25 auswirken. Dies verhindert ein Abscheren der ersten Dichtung 11 von ihrem Sitz. Die Dichtung 11 oberhalb des zweiten Halbbogens 26 ist diesbezüglich unproblematisch, da die zunehmende Kegelstumpfbreite dem Abscheren entgegenwirkt. Ein lang ausgeformter erster Halbbogen 25 begünstigt auch die Endpositionierung der Messkapsel 2 mit dem Gehäuse 1. Hilfsweise kann auch ein Kegelstumpfprofil mit einem Winkel zwischen 10° und 20° angewendet werden. Bei einem Winkel kleiner als 10° müsste die Buchse 24 mit Einlaufschrägen versehen werden, damit ein Abscheren der ersten Dichtung 11 vermieden werden kann.

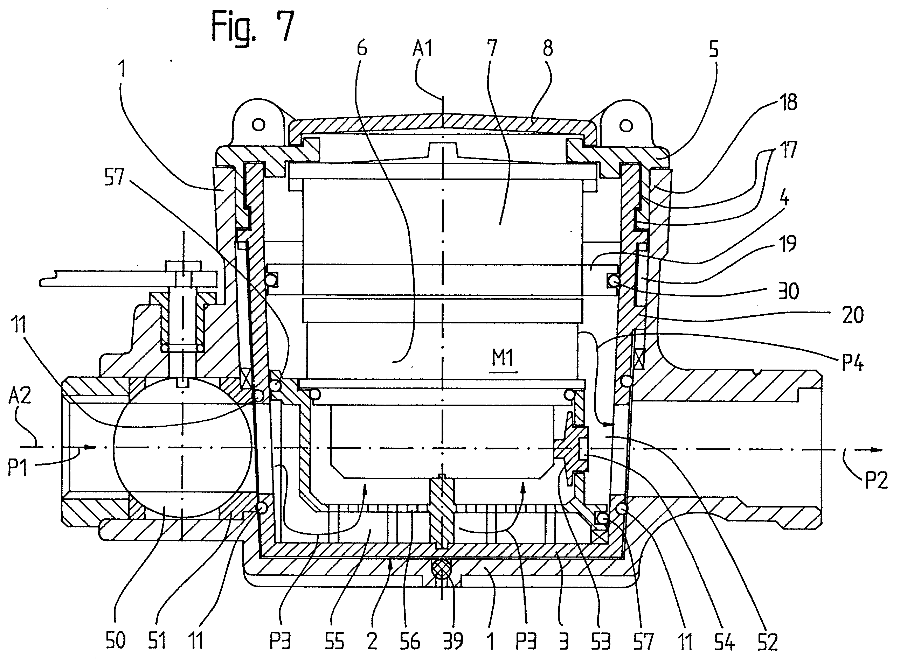

Fig. 7 zeigt einen Mehrstrahlzähler mit einer Messkapsel, die in den wesentlichen Merkmalen mit der Messkapsel des oben erläuterten Einstrahlzählers übereinstimmt. Dies gilt insbesondere für die Kapselform und die Führung des Parallelsteges 20 in der ersten Nut 20. Eine Endpositionierung über Halbbögen kann wegen des geringen Winkels des Kegelstumpfprofiles nur ungenügend erreicht werden. Weil das Medium bei einem Mehrstrahlzähler mehrmals umgelenkt wird, bis es in die Messkammer eintritt ist die Endpositionierung nicht so entscheidend wie bei einem Einstrahlzähler, bei dem das Medium direkt die Messkammer erreicht. Durch geringe Positionsänderungen verursachte Einlaufstörungen haben daher beim Mehrstrahlzähler kaum Auswirkungen. Ein Dichtelement 50 eines Kugelhahnes 51 am Einlauf P1 und eines nicht dargestellten Rückflussverhinderers am Auslauf P2 sind mit Einlaufschrägen wie oben beschrieben ausgerüstet, sie sind jedoch aufgrund des Massstabes nicht dargestellt. Ein in der Trennwand zwischen der Messkammer M1 und einem Auslaufkanal 52 angeordnetes Regulierküken 53 ist vom Auslauf P2 her zugänglich. Das Regulierküken 53 kann auch so angeordnet dein, dass es über das Gehäuse 1 zugänglich ist. Das drehbar angeordnete an sich bekannte Regulierküken 53 weist ein mehr oder weniger verschliessbares Kreissegment auf, sodass eine dosierbare Menge des Mediums an dem Flügelrad 6 vorbeifliesst. Nach dem Eichvorgang wird das Regulierküken 53 mit einer Plombe 54 gesichert. Die Anordnung des Regulierkükens 53 in der Trennwand zwischen Messkammer M1 und Auslaufkanal vermindert die Gefahr von Verstopfungen im Regulierkükenbreich insbesondere bei Heisswasserzählern. Das mit einem Pfeil P3 symbolisierte einströmende Medium gelangt über einen Einlaufkanal 55 und ein Sieb 56 zum Flügelrad 6, treibt diese an und strömt mit einem Pfeil P4 symbolisiert in den Auslaufkanal 52. Eine fünfte Dichtung 57 trennt die Einlaufseite von der Auslaufseite. In Fig. 7 ist die in Fig. 1 gezeigte Tauchhülse 21 nicht dargestellt. Ein Mehrstrahlzähler mit einer Tauchhülse ist aber ohne weiteres denkbar.

## Patentansprüche

1. Zähler für Flüssigkeiten und Gase bestehend aus einem kegelstumpfförmigen Gehäuse (1) mit einem rohrförmigen Einlauf (P1) und Auslauf (P2) sowie einer in das Gehäuse (1) einsetzbaren kegelstumpfförmigen Messkapsel (2) mit einem ein Zählwerk (7) in Bewegung setzenden Antrieb (6), wobei die Messkapsel (2) mittels einer Einlassbohrung (9) mit einer ersten Dichtung (11) an den Einlauf (P1) und mittels einer Auslassbohrung (10) mit einer zweiten Dichtung (11) an den Auslauf (P2) des Gehäuses (1) angeschlossen ist,
dadurch gekennzeichnet,
dass die Messkapsel (2) druckfest ist, und das Gehäuse (1) vom Medium unbenetzt bleibt, und
dass von ausserhalb des Gehäuses (1) zugängliche Mittel zur Eichung der druckbeaufschlagten Messkapsel (2) vorgesehen sind.

2. Zähler für Flüssigkeiten und Gase nach Anspruch 1,
dadurch gekennzeichnet,
dass die Messkapsel (2) einen Kanalteil (3) mit Einlassbohrung (9), Auslassbohrung (10) und Messkammer (M1) sowie eine den Kanalteil (3) abschliessende Druckplatte (4) und einen Kopfring (5) aufweist.

3. Zähler für Flüssigkeiten und Gase nach Anspruch 2,
dadurch gekennzeichnet,
dass der Kanalteil (3) an der äusseren Mantelfläche strahlenförmig angeordnete keilförmige Rippen (31) und einen Parallelsteg (20) aufweist, der von einer an der Gehäuseinnenseite angeordneten ersten Nut (19) geführt wird,
dass das Kegelstumpfprofil des Kanalteiles (3) ein Bogen oder eine Ellipse ist,
dass der Kanalteil (3) an der Einlassbohrung (9) und an der Auslassbohrung (10) je einen ersten Halbbogen (25) und einen zweiten Halbbogen (26) aufweist und dass der Kanalteil (3) an der äusseren Mantelfläche eine die Halbbögen (25, 26) verbindende zweite Nut (34) mit einem die erste und die zweite Dichtung (11) verbindenden Gürtel (35) aufweist.

4. Zähler für Flüssigkeiten und Gase nach Anspruch 2,
dadurch gekennzeichnet,
dass das Gehäuse (1) und der Kopfring (5) mittels eines Kopfringgewindes (18) sowie der Kopfring (5) und der Kanalteil (3) mittels eines Feingewindes (17) in Verbindung stehen.

5. Zähler für Flüssigkeiten und Gase nach den Ansprüchen 1 und 3,
dadurch gekennzeichnet,
dass das Gehäuse (1) am Einlauf (P1) und am Auslauf (P2) auswechselbare Buchsen (24) aufweist, die Anlageflächen für die erste bzw. zweite Dichtung (11) bilden und von den Halbbögen (25, 26) überragt werden und dass am Gehäuse (1) ein Ventil (39) angeordnet ist, das von der Gehäuseaussenseite bedienbar ist.

6. Zähler für Flüssigkeiten und Gase nach Anspruch 2,
dadurch gekennzeichnet,
dass die Druckplatte (4) messkammerseitig erste Stauflügel (37) aufweist,
dass der Kanalteil (3) am messkammerseitigen Boden zweite Stauflügel (38) aufweist und
dass die Messkammer (M1) eine Messkammervergrösserung (M2) aufweist.

7. Zähler für Flüssigkeiten und Gase nach Anspruch 6,
dadurch gekennzeichnet,
dass zwischen der Druckplatte (4) und dem Kanalteil (3) eine vierte Dichtung (30) angeordnet ist und dass die Druckplatte (4) zur Eichung der Messkapsel (2) drehbar ist.

8. Zähler für Flüssigkeiten und Gase nach Anspruch 6,
dadurch gekennzeichnet,
dass der Kanalteil (3) eine drehbare Bodenplatte (43) mit zweiten Stauflügeln (38) aufweist, die zur Eichung der Messkapsel (2) von der Gehäuseaussenseite zugänglich ist, wobei eine fünfte Dichtung (46) den Kanalteil (3) im Bodenbereich dicht hält.

9. Zähler für Flüssigkeiten und Gase nach einem der Ansprüche 1 bis 8,
dadurch gekennzeichnet,
dass am Einlauf (P1) oder Auslauf (P2) eine in der durch die Zählermittelachse (Al) und die Rohrmittelachse (A2) gebildete Ebene liegende Tauchhülse (21) angeordnet ist, in die ein Temperaturfühler einbaubar ist.

10. Zähler für Flüssigkeiten und Gase nach einem der Ansprüche 2 bis 9,
dadurch gekennzeichnet,
dass in der Messkammer (M1) als Antrieb (6) ein Flügelrad (6) mit einer Koppelscheibe (49) angeordnet ist, die der berührungslosen Erfassung der Flügelraddrehzahl dient, wobei an der Druckplatte (4) zählwerkseitig eine zur Aufnahme einer Spule vorgesehene Tasche (48) angeordnet ist.

11. Zähler für Flüssigkeiten und Gase nach einem der Ansprüche 2 bis 9,
dadurch gekennzeichnet,
dass der Kanalteil (3) einen Einlaufkanal (55) mit einem Sieb (56) und einen Auslaufkanal (52) aufweist und
dass in der Trennwand zwischen Messkammer (M1) und Auslaufkanal (52) ein Regulierküken (53) zur Eichung der Messkapsel (2) angeordnet ist.

## Claims

1. Counter for liquids and gases, consisting of a truncated-cone-shaped housing (1) with a tubular inlet (P1) and outlet (P2) as well as a truncated-cone-shaped measuring cap (2) insertable into the housing (1) with a drive (6) setting in motion a counting mechanism (7), wherein the measuring cap (2) is connected by means of an inlet bore (9) with a first seal (11) to the inlet (P1) and by means of an outlet bore (10) with a second seal (11) to the outlet (P2) of the housing (1),
characterised in that
the measuring cap (2) is pressure-resistant and the housing (1) remains unwetted by the medium,
and that means are provided for the calibration of the pressurised measuring cap (2) which are accessible from outside the housing (1).

2. Counter for liquids and gases according to claim 1,
characterised in that
the measuring cap (2) comprises a channel part (3) with an inlet bore (9), outlet bore (10) and measuring chamber (M1), as well as a pressure plate (4), which seals the channel part (3), and a head ring (5).

3. Counter for liquids and gases according to claim 2,
characterised in that the channel part (3) comprises on the outer surface area radially disposed wedge-shaped fins (31) and a parallel web (20) which is guided by a first groove (19) disposed on the inside of the housing,
that the truncated-cone profile of the channel part (3) is an arch or an ellipse,
that the channel part (3) comprises on the inlet bore (9) and on the outlet bore (10) respectively a first half-arch (25) and a second half-arch (26) and that the channel part (3) comprises on the outer surface area a second groove (34) connecting the half-arches (25, 26), together with a belt (35) connecting the first and second seals (11).

4. Counter for liquids and gases according to claim 2,
characterised in that
the housing (1) and the head ring (5) are linked by means of a head ring thread (18) and the head ring (5) and the channel part (3) are linked by means of a fine-pitch thread (17).

5. Counter for liquids and gases according to claims 1 and 3,
characterised in that
the housing (1) comprises at the inlet (P1) and at the outlet (P2) exchangeable sleeves (24) which form bearing surfaces for the first and second seals (11) and are overlapped by the half-arches (25, 26), and that on the housing (1) a valve (39) is disposed which can be operated from outside the housing.

6. Counter for liquids and gases according to claim 2,
characterised in that
the pressure plate (4) comprises measuring-chamber-side first wickets (37),
that the channel part (3) comprises on the measuring-chamber-side base second wickets (38) and
the measuring chamber (M1) comprises a measuring chamber enlargement (M2).

7. Counter for liquids and gases according to claim 6,
characterised in that
between the pressure plate (4) and the channel part (3) a fourth seal (30) isdisposed and that the pressure plate (4) is rotatable for the calibration of the measuring cap (2).

8. Counter for liquids and gases according to claim 6,
characterised in that
the channel part (3) comprises a rotatable baseplate (43) with second wickets (38), which is accessible for the calibration of the measuring cap (2) from outside the housing, wherein a fifth seal (46) keeps the channel part (3) sealed in the base area.

9. Counter for liquids and gases according to any one of claims 1 to 8,
characterised in that
at the inlet (P1) or outlet (P2) is disposed an immersion shell (21) lying in the plane formed by the counter centre line (A1) and the tube centre line (A2), into which immersion shell (21) a temperature sensor can be fitted.

10. Counter for liquids and gases according to any one of claims 2 to 9,
characterised in that
there is disposed in the measuring chamber (M1) as drive (6) a flywheel (6) with a coupling disc (49) which serves for the contactless recording of the flywheel speed, there being disposed on the pressure plate (4) on the counting mechanism side a pocket (48) provided for accommodating a coil.

11. Counter for liquids and gases according to any one of claims 2 to 9,
characterised in that
the channel part (3) comprises an inlet channel (55) with a screen (56) and an outlet channel (52)
and
that in the partition between the measuring chamber (M1) and the outlet channel (52) an adjustable plug (53) is disposed for the calibration of the measuring cap (2).

## Revendications

1. Compteur pour liquides et gaz constitué d'un boîtier (1) de forme tronconique, comportant une entrée (P1) et une sortie (P2) tubulaires, ainsi que d'une capsule de mesure (2) de forme tronconique, insérable dans le boîtier (1) et comportant un dispositif d'entraînement (6) mettant en mouvement un mécanisme de comptage (7), la capsule de mesure (2) étant raccordée à l'entrée (P1) du boîtier (1) au moyen d'une forure d'admission (9), munie d'un premier élément d'étanchéité (11), et à la sortie (P2) du boîtier (1) au moyen d'une forure d'évacuation (10), munie d'un deuxième élément d'étanchéité (11), caractérisé
en ce que la capsule de mesure (2) est résistante à la pression et le boîtier (1) reste non humecté par le fluide, et
en ce que des moyens, accessibles de l'extérieur du boîtier (1), sont prévus pour l'étalonnage de la capsule de mesure (2) exposée à la pression.

2. Compteur pour liquides et gaz selon la revendication 1, caractérisé
en ce que la capsule de mesure (2) présente un élément formant canal (3), qui comporte la forure d'admission (9), la forure d'évacuation (10) et la chambre de mesure (M1), ainsi qu'une plaque de pression (4) fermant l'élément formant canal (3) et une bague-chapeau (5).

3. Compteur pour liquides et gaz selon la revendication 2, caractérisé
en ce que l'élément formant canal (3) présente des nervures en forme de coin (31), situées sur sa surface latérale extérieure selon une disposition en rayons, et un talon parallèle (20), qui est guidé par une première rainure (19) située sur la face intérieure du boîtier,
en ce que le profil du tronc de cône de l'élément formant canal (3) est un arc ou une ellipse,
en ce que l'élément formant canal (3) comporte, au niveau de la forure d'admission (9) et au niveau de la forure d'évacuation (10), une première partie semi-circulaire (25) et une deuxième partie semi-circulaire (26), respectives, et en ce que l'élément formant canal (3) présente, sur sa surface latérale extérieure, une deuxième rainure (34) réunissant les parties semi-circulaires (25, 26), avec une ceinture (35) reliant les premier et second éléments d'étanchéité (11).

4. Compteur pour liquides et gaz selon la revendication 2, caractérisé
en ce que le boîtier (1) et la bague-chapeau (5) sont reliés ensemble au moyen d'un filetage (18) de la bague-chapeau, et la bague-chapeau (5) et l'élément formant canal (3) sont reliés ensemble au moyen d'un filetage fin (17).

5. Compteur pour liquides et gaz selon les revendications 1 et 3, caractérisé
en ce que le boîtier (1) comporte, à l'entrée (P1) et à la sortie (P2), des douilles remplaçables (24), qui forment des surfaces d'appui pour les premier et second éléments d'étanchéité (11) et qui sont couronnées par les parties semi-circulaires (25, 26), et en ce que sur le boîtier (1), est disposée une soupape (39), qui peut être actionnée de l'extérieur du boîtier.

6. Compteur pour liquides et gaz selon la revendication 2, caractérisé
en ce que la plaque de pression (4) présente, du côté de la chambre de mesure, des premières ailettes de retenue (37),
en ce que l'élément formant canal (3) présente sur son fond, du côté de la chambre de mesure, des secondes ailettes de retenue (38) et
en ce que la chambre de mesure (M1) présente un élargissement (M2).

7. Compteur pour liquides et gaz selon la revendication 6, caractérisé
en ce qu'un quatrième élément d'étanchéité (30) est disposé entre la plaque de pression (4) et l'élément formant canal (3) et en ce que la plaque de pression (4) est orientable pour l'étalonnage de la capsule de mesure (2).

8. Compteur pour liquides et gaz selon la revendication 6, caractérisé en ce que l'élément formant canal (3) comporte une plaque de fond orientable (43) munie des secondes ailettes de retenue (38), qui pour l'étalonnage de la capsule de mesure (2) est accessible depuis l'extérieur du boîtier, un cinquième élément d'étanchéité (46) maintenant l'élément formant canal (3) étanche dans la région du fond.

9. Compteur pour liquides et gaz selon l'une des revendications 1 à 8, caractérisé
en ce qu'à l'entrée (P1) ou à la sortie (P2), il est disposé un étui immergé (21) qui est placé dans le plan défini par l'axe central (A1) du compteur et par l'axe central (A2) des tubes, et dans lequel peut être incorporé un capteur de température.

10. Compteur pour liquides et gaz selon l'une des revendications 2 à 9, caractérisé
en ce que, dans la chambre de mesure (M1), est disposée, en tant que dispositif d'entraînement (6), une roue à ailettes (6) comportant un disque de couplage (49), qui sert à réaliser une détection sans contact de la vitesse de rotation de la roue à ailettes, une poche (48), prévue pour recevoir une bobine, étant ménagée dans la plaque de pression (4), du côté du mécanisme de comptage.

11. Compteur pour liquides et gaz selon l'une des revendications 2 à 9, caractérisé
en ce que l'élément formant canal (3) présente un canal d'entrée (55) muni d'un filtre (56) et un canal de sortie (52), et
en ce que, dans la paroi de séparation entre la chambre de mesure (M1) et le canal de sortie (52), il est disposé un robinet de réglage (53) pour l'étalonnage de la capsule de mesure (2).
